# EUROPEAN PATENT APPLICATION

(11) **EP 2 184 267 A1**
(43) Date of publication of application: **12.05.2010**
(21) Application number: 09013016.2
(22) Date of filing: 15.10.2009
(51) Int. Cl.: C03C 25/24, C03C 25/40, C08J 5/08

(54) **Sizing composition for fibers, sized fibers and method of using to make molding compounds and FRP molded products**

(30) Priority: 10.11.2008 US 267792
(71) Applicant: Johns Manville, Denver CO 80202 (US)
(72) Inventor: Gleich, Klaus Friedrich, Highlands Ranch, Colorado 80126 (US); Nandi, Souvik, Arvada, Colorado 80003 (US); Pollman, Gary Alan, Sylvania, Ohio 43560 (US)
(74) Representative: Luderschmidt, Schüler & Partner

(57) **Abstract**

Disclosed are aqueous size compositions for reinforcing fibers containing very little or no polymer film formers, but comprising one or more coupling agents, one or more lubricants and optionally one or more other functional ingredients that do not include a resin polymer film former. Also disclosed are reinforcing fiber strands having such a sizing thereon, molding compounds containing these reinforcing fiber strands and methods of making the molding compounds and reinforced polymer composite products.

## Description

### BACKGROUND OF THE INVENTION

Chopped strand reinforced polymer molded products such as chopped strand for thermoplastics, usually comprising glass fibers but also or alternatively carbon, ceramic or polymer fibers, alone or in combination, are typically made from pellets, or other forms, comprising one or a mixture of polymers having the reinforcing fibers dispersed therein. These pellets, loafs, etc., are typically made by feeding dry bundles of fibers containing up to several thousand fibers, in the form of rovings of many continuous fibers or chopped strands of many fibers, typically having a length of about 3 mm to about 6 or 7mm or even up to about 13 mm, into a compounding or extruding machine along with one or more polymers and heating with high shear mixing to plasticize the polymer(s) and disperse the fibers therein. To achieve good feeding characteristics in the dry fiber bundles, important to the users, a substantial amount of film former or binding agent is used in the chemical sizing coated on each fiber during its manufacture to prevent filamentation during storage, shipment and handling. Filamentation is the breaking down of the bundles resulting in excessive small bundles and individual fibers in the product, the presence of which causes bridging in the feeding bin cones, and other fiber handling equipment resulting costly scrap and downtime.

Fiber products used to make FRP have a sizing coating on the fibers. These sizings are known and normally contain a coupling agent such as one or more silanes, one or more lubricants and one or more film formers or binders, and can contain other ingredients such as dispersants, fillers, stabilizers and others. The sizings are normally applied as an aqueous slurry, solution or emulsion, but liquids other than water are sometimes used including a solvent for at least one of the sizing ingredients. The higher amount of film former, bonding agent(s), used in the sizing on the fibers results in stronger fiber to fiber bonding in the bundles. This is good for fiber handling characteristics, but not good for later processing and final product characteristics. Once in the compounder and in contact with the polymer(s) it is usually desirable that the bundles separate into individual fibers and that the fibers disperse thoroughly in the polymer(s). The time and amount of mixing action to accomplish this has a practical limit, and because of the bond strength between the fibers, very high shear mixing is required to achieve a suitable degree of filamentation, fiber dispersion and wet out (coating of the fibers with the polymer or polymer mixture). This very high shear damages the surface and breaks the fibers, and also falls short of complete fiber dispersion. As a result, the reinforced plastic parts produced do not reach the potential in surface characteristics and physical properties. Most product and process development work in this area is aimed at addressing these problems and opportunities.

Potential cost reduction opportunities also exist in the chopped fiber bundle manufacturing processes. The fiber bundles are made by pulling fibers from a plurality of fiberizers while the material is in a molten or plastic state, cooling the fibers, coating the fibers with water and the chemical sizing containing one or more film formers/ binding agents, gathering the fibers into strands, and either winding the strands into direct rovings or chopping the strands into segments of desired lengths and drying the wet chopped strands in a vibrating flatbed oven and sorting the resultant dry bundles to remove undesirable small bundles and individual fibers, lumps and fuzz clumps, a significant amount of scrap. A typical process for making chopped strand reinforcements can be seen in U. S. Patent 3,996,032. These types of processes produce chopped strand bundles having a wide range of diameters and containing a wide range of numbers of fibers, e.g. from just a few fibers to 4000 or more fibers per segment. The binding agents in the sizing are expensive and the significant amount of undesirable material removed during and after drying the bundles is costly scrap. Many dry chopped strand products have and are being produced with the above-described processes and used in making fiber reinforced products of a wide variety.

It is known that using longer fibers in polymers, polymer mixtures and polymer precursor mixtures produces superior properties in the molded parts and many processes have been developed to address the added problem of dispersing much longer fibers, e.g. up to at least 38 mm long fibers in the polymer or polymer mixture. These long fiber reinforcement products also contain fibers coated with a sizing containing one or more film formers/binders. However, less than the desired degree of enhanced product performance has been achieved when adding the long fibers in the traditional up-front location of the plasticizer, due to the high shear resulting in the shortening of the fibers and less than the desired degree of dispersion of the long fibers has been achieved when adding the long fibers after the high shear section of the plasticizer. This has been addressed by using two or more screw plasticizers, but these take up more space and are more expensive to purchase and operate. Some of these systems and methods are disclosed in U.S. Patent Nos. 6,676,874, 6,468,464, 6,364,518, and 6,186,769 and in EP 416,859, EP 751,828 and WO 01/54877. These limitations are slowing the rate of growth of long fiber reinforced polymer products market share in the competition with products made of metals and other short fiber materials.

It is also known to feed rovings comprised of many fibers, normally glass fibers, into an extruder or compounder where they are broken or cut into long strands of fibers for dispersing into one or more polymers also fed into the extruder or compounder to make pellets or other shapes for molding into fiber reinforced plastic products. The fibers in these roving products used in this manner also contain one or more film formers/binders.

### DESCRIPTION AND BEST MODE

The present invention is based on the surprising discovery that if the chemical sizing applied onto the surfaces of reinforcing fibers during their manufacture contain none, or only a very small, unconventional, amount of film former/binder, superior properties are achieved in molded fiber reinforced polymer products containing strands of these fibers, and also the manufacture of the reinforcing fiber products is greatly simplified and their cost is substantially reduced. The reinforcing fibers are most typically glass fibers, but can be any fibers used to reinforce polymers to form fiber reinforced products (FRP). The sized fibers are gathered into strands of wet, sized fibers and then chopped to form chopped strand or wound into packages of rovings. The chopped strands or rovings of wet, sized reinforcing fibers can then be dried, partially dried or used as is. The moisture content of the dried fibers can be as high as about 2 wt. percent, but normally is less than about 1 wt. percent. The moisture content of the fibers used "as is" will vary between about 9 wt. percent and about 20 wt. percent, more typically about 13 +/- 4 wt. percent and the moisture content of the partially dried fibers can be between about 2 wt. percent and about 13 wt. percent..

The sizings of the invention contain one or more coupling agents and one or more lubricants and can contain other functional ingredients like biocides or anti-foam agents, etc., but contain very little or most typically no film former/binder. By filmformer/binder or film former or binder is meant one or more polymers or resins that, after all or most (leaving less than 1 wt. percent in the fiber strand) of the water in the wet sized fiber strands has been removed from the sizing on the fibers, function to bind the fibers together in the strand with such strength that substantial mechanical action is required to separate the fibers in the strand from one another, and even then the strand tends to break down in a plurality of smaller strands containing a plurality of fibers rather than into individual fibers. This is a conventional definition of film former or binder as used in a fiber sizing. By "very little" is meant substantially less than conventional concentrations in reinforcing fiber sizings in products used for reinforcing molded or pultruded polymer products, typically less than 50 percent of the amount used in the conventional size compositions, more typically less than 25 percent used in the conventional size compositions, even more typically less than 10 percent used in the conventional size compositions, and most typically no more than trace amounts of film former/binder being present in the size compositions, including no film former/binder or film former or binder being present in the size composition on the reinforcing fiber strand products of the invention. The film former can be in the range of 0 wt. percent to about 0.35 or 0.40 wt. percent of the sizing composition. The coupling agents, normally various silanes as is well known, vary in the range of about 0.1 wt. percent to about 0.4 wt. percent of the sizing composition. The lubricant should be in the range of about 0.2 wt. percent and about 1.2 wt. percent, more typically less than about 0.8 wt. percent of the sizing composition. The remainder of the sizing composition will be water and known non-film former functional ingredients like biocides, anti-foaming agents, fungicides and the like. The sizing should be applied to the fibers in amounts that the loss on ignition of the sized inorganic, such as glass, fibers is in the range of about 0.2 to about 0.6 wt. percent, more typically in the range of about 0.1 to about 0.4 wt. percent and most typically in the range of about 0.3 +/- 0.15 wt. percent.

The superior performance in the fiber strand products of the invention is due to the absence, or the greatly reduced amount, of a film former or binder in the sizing composition on the fibers in the reinforcing strand products. The film former or binder is conventionally added to the size for the purpose of bonding the fibers together in the remainder of the strand product manufacturing processes, including during wet chopping, during vibration in the drying process, and during the process of making assembled rovings from dry fiber strands wound in cakes or packages. Without the film former/binder in the sizing, the fiber strands would come apart causing fuzz, strands containing fewer fibers than desired, and broken fibers detracting from the product quality and substantially increasing scrap, reducing productivity and adding other product costs necessary to remove fuzz, restart broken strands, etc. The film former/binder in the sizing does not enhance the performance of the reinforcing strands in the molded polymer products, but can detract from the desired performance when the film fomer/binder is incompatible with the polymer(s) in the molded reinforced polymer products. Therefore, it is normally required to do substantial research to find a film former/binder for each polymer used in the customers' reinforced molded products, to inventory each of these products and to keep them separate from each other - all this and other things required for each product adds to the cost of manufacturing, storing and shipping and also increases complexity leading to more mistakes further adding to the cost. Also, the film former/binder interferes with the coupling agent bonding to the fiber surface and also interferes with the coupling agent bonding to the matrix polymer(s) in the molded products, thus reducing the strength below the optimum strength in the reinforced molded products.

Another costly disadvantage of conventional sizing compositions containing one or more film formers/binders used to make conventional roving products is that some portion of the film former/binder migrates to the surface of the roving package during drying resulting in an excessive film former/binder content in an outer shell of the dried roving package, bonding the fiber strands in the outer shell (usually from 3/16 - 1/4 inch thick or thicker) together excessively necessitating that this outer shell must be removed and discarded prior to packaging for storage and shipment. This latter step adds substantial labor and scrap cost to the reinforcing strand roving products.

The reinforcing strand products of the invention contain sized fibers in which the sizing contains one or more coupling agents and one or more lubricants and very little to only trace amounts, or no, film former or binder. The size composition can contain non-film former or non-binder functional ingredients such as biocides, anti-foam agents, wetting agents, etc. The fiber strand products of the invention will be in the form of chopped strands of fibers, normally having a moisture content of less than 1 wt. percent, more typically less than 0.5 wt. percent and most typically less than about 0.3 wt. percent to bone dry. The fiber products of the invention will also include a roving, normally a direct wound roving, and will have been dried to a moisture content of less than 1 wt. percent, typically less than 0.5 wt. percent and most typically less than 0.3 wt. percent. The moisture content of the fiber products of the invention can be zero wt. percent, but normally the product, even if reduced to bone dry in the drying process, will absorb from 0.02 to about 0.2 wt. percent from the humidity in the air in packaging and storage and/or shipping.

The fibers are most typically glass fibers but can also include carbon fibers, other inorganic fibers like ceramic fibers and mineral fibers including oxides, carbides, nitrides and borides of silica, aluminum, zircon, magnesium and zirconium. Conventional forming processes are used to make the fibers in the reinforcing strand products and the method of forming the fibers including application of the sizing is not part of the invention.

The sizing compositions of the invention are applied to the fibers before forming the fiber strands, winding and drying. The sizing compositions of the invention contain one or more coupling agents, normally silanes, and oner or more lubricants and can optionally contain other non-film former or non-binder ingredients, but contain very little to only trace amounts of, or no, film former/binder ingredients. Silanes useful in the practice of the present invention include reactive organofunctional silanes having the formula (I) ((R1)bY)aR23aSiR3NR4R5R6 wherein R1 and R2 are monovalent radicals, R3 and R5 are divalent radicals, R4 and R6 are monovalent radicals, and Y is oxygen or nitrogen, a=1 to 3, and b=1 or 2 depending on the valence of Y. In formula I above, R1 is a monovalent radical, e.g., hydrogen, a dialkylamine, or, preferably a hydrocarbon functionality, including, but not limited to, allyl, cycloalkyl, or alkyl (linear or branched) that may contain heteroatoms, e.g., oxygen or nitrogen. Most preferably R1 is an alkyl radical of 1-6 carbon atoms, e.g., methyl, ethyl, n-propyl, or iso-butyl. The value of b depends on the valency of Y, i.e., b=1 for oxygen and b=2 for nitrogen. Preferably Y is oxygen. Preferably a is 3, but if a<3, each R2 is a monovalent radical, including, but not limited to, a hydrocarbon radical, a saturated hydrocarbon, or an unsaturated hydrocarbon. Preferably R2 is cycloalkyl, or alkyl (linear or branched) that may contain heteroatoms, e.g., oxygen or nitrogen, and 1-10 carbon atoms. Most preferably R2 is methyl or ethyl. R3 is a divalent radical, preferably having 1-10 carbon atoms, and preferably cycloalkyl, or alkyl (linear or branched) that may contain heteroatoms, e.g., oxygen or nitrogen. Most preferably R3 is propyl. A preferred has R1=ethyl, R3= propyl, R4=hydrogen, R5=0, R6= -C(=O)NH2, a=3, b=1, and Y=oxygen. Such silanes include uriedopropyltriethoxysilane that is commercially available as Y or A-11542 and A 1100 from GE/OSi Silicones. There are many other conventional silanes and conventional coupling agents typically used in fiber size compositions and these are suitable for the sizings of the invention.

The ratio of the coupling agent(s) to the lubricant(s) in the water or other liquid solvent or carrier is critical to the sizing compositions of the invention as is the concentration of the sizing components on the fibers. This ratio should be in the range of about 1:3 to about 1:2 for best results. The concentration of sizing components on the fibers can be measured by running a conventional loss on ignition test (LOI) on the sized fibers after they are reduced to bone dry. Typically the LOI of the sized fibers of the invention is in the range of 0.1- 0.6 wt. percent, more typically in the range of 0.2 -0.45 wt. percent and most typically in the range of 0.3 - 0.43 wt. percent such as 0.39 wt. percent.

The sizing composition of the invention further comprises at least one lubricant, which may also function as a wetting agent or dispersant. Useful fiber lubricants include cationic, non-ionic or anionic lubricants and mixtures thereof. Non-limiting examples of such fiber lubricants include amine salts of fatty acids (which can, for example, include a fatty acid moiety having 12 to 22 carbon atoms and/or tertiary amines having alkyl groups of 1 to 22 atoms attached to the nitrogen atom), alkyl imidazoline derivatives (such as can be formed by the reaction of fatty acids with polyalkylene polyamines), acid solubilized fatty acid amides (for example, saturated or unsaturated fatty acid amides having acid groups of 4 to 24 carbon atoms such as stearic amide), condensates of a fatty acid and polyethylene imine and amide substituted polyethylene imines. The dispersant used in the sizing composition preferably comprises at least one of a fatty amide and a fatty imidazoline, and more preferably, a mixture thereof. One such mixed dispersant is commercially available as LUBRIL™ Cat-X VC from Eastman Chemical.

The sizing can also contain one or more surfactants to accomplish at least one of: the functions of improving the wetting of fibers by the aqueous sizing formulation, reducing surface attraction between the fibers; and emulsifying certain constituents of the sizing composition. One desirable class of surfactants is ethoxylated amines and diamines and derivatives thereof. Typically, the surfactant(s), if used, is present in the sizing composition in an amount ranging from 0 to 2 wt.% of the aqueous sizing. More typically 0 to about 1 wt % is present, and most typically, about 0 to 0.75 wt % is present.

The sizing composition can also contain one or more biocide agents that kill microbes in the composition and inhibit new microbial growth that can, in some cases, cause gradual breakdown of the sizing agents on the fiber surface during storage, leading to impaired performance. Preferably the biocide is active against fungi, bacteria, slime, and other microorganisms known to detrimentally affect fiber performance. Often two or more agents are used in amounts effective to provide both immediate and long-term antimicrobial functionality. Among the biocides suitably included are isothiazolin based salts, methylene bis(thiocyanate), 2-2-dibromo-3-nitropropionamide, 1,4-bis(bromacetoxy)-2-butene, 2,2-dibromo-2-cyanoacetamide, 5-oxo-3,4,-dichloro-1,2-dithiol, sodium dimethyldithiocarbamate. The more preferable biocides are isothiazolin based salts, methylene bis(thiocyanate), and 2-2-dibromo-3-nitropropionamide, which are sold as CL-2150, CL-2141, and CL-206 by Chemtreat, respectively. The amount of biocide used in the sizing composition is frequently limited by environmental considerations and government regulations. For example, regulations permit use of up to about 1200 ppm of the CL-206 formulation, which is known to provide 240 ppm of active agent. The CL-2141 and CL-2150 materials are beneficially used at a level of about 1600 ppm to provide 25 ppm of active agent. Suitable effective amounts of other agents are known to those skilled in the art.

When the sizing compositions of the invention contain other functional ingredients including one or more surfactants, anti-foam agents, biocides, fungicides, etc., none of these functional ingredients are or contain a polymer resin film former

The invention also includes the method of sizing the fiber strand products of the invention, the comprising steps of feeding fibers to a sizing applicator, applying a sizing composition of the invention described above onto the surfaces of the fibers, gathering the fibers into a strand, chopping the fiber strands into a desired length or winding the strand(s) of sized fibers onto a mandrel to form a roving package, drying the chopped strands or roving packages and finishing the dry roving packages or dried chopped fiber strands into a form suitable for storage and shipping. The finishing typically includes placing a fixed weight of dry chopped fiber strands into a plastic bag, in a kraft box or shipping container, and sealing the plastic bag to prevent moist air from entering the plastic bag. In the case of rovings the finishing normally includes placing the dry roving packages in a plastic bag or enclosing each roving package in a shrink wrap or stretch wrap and placing the enclosed roving packages on a pallet or in a shipping container in a conventional manner. Since the dried roving packages contain no more than very little to only trace amounts or no film former or binder, the roving package after drying does not have a hard outer shell and can be packaged for storage and shipment without having to remove any outer strand material, thus greatly reducing the cost and substantially increasing productivity of the manufacturing operation.

The invention also includes feeding the sized fiber strands, roving or chopped, into an apparatus for blending dispersing, breaking in the case of roving and kneeding the sized fiber fibers into one or more polymers, normally hot, to form pellets or loafs of fiber reinforced plastic molding compound. Conventional apparatus are used for this purpose such as processing equipment and systems including injection molding equipment, extrusion equipment, blow molding equipment, compression molding equipment including a shot pot/accumulator system, reciprocating screw systems as well as fixed screw systems, plasticators, compounding extruders, compounding mixers and sheet molding compound systems. For processing polymer or polymer precursor or a polymer mixture that is moisture sensitive, it is typical to vent the volatiles as soon as possible in the second zone of the chamber or dry the fibers just before entry into a barrel or chamber of the plasticator, mixer or compounder. Although the system includes plasticators, mixers and compounders, for purposes of describing the invention, the term plasticator will be used for simplicity.

The invention also includes molding compounds made by the above described methods of the invention and also molded FRP (fiber reinforced plastic) and LFRP (long fiber reinforced) parts made from the pellets or loafs of molding compounds made by the methods in the systems described above, the molded parts having superior properties than parts made by using conventional sized fiber strands.

All kinds of thermoplastic polymers and polymer precursors and mixtures thereof conventionally used in FRP and LFRP products can be used in the methods of the invention as well as at least most of the thermoset polymers used in sheet molding compounds (SMC) and bulk molding compounds (BMC). These include polyolefins like polypropylene and polyethylene, polyamides, polyesters like polybutylene terephthalate and polyethylene terephthalate, polycarbonates, acetals, styrenics like SMA, ABS, SAN, PAN and PPO, thermoplastic urethanes, liquid crystal polymers, polyimidazole, polyether sulfone, polyphenelene sulfide and others including thermoplastic precursors, reactive thermoplastics. The thermoset polymers or thermoset polymer precursors include unsaturated polyester, vinyl ester, phenolic and epoxy resins.

The invention also includes the above methods and products in which particles of recycle FRP and LFRP containing long or short sized fibers of the invention are fed into the compounder, mixer or plasticator with or without the sized fiber strands of the invention described above, or further upstream with the polymer or polymer precursor. When the recycle or reclaim is added with the polymer or polymer precursor, the recycle fibers will be shortened, especially in the first zone, but will still act as a reinforcing filler. However, recycle or reclaim can be fed downstream before, with or after the addition of the long reinforcing fibers and doing this will reduce further damage to the recycle or reclaim fibers. In all of the methods of the invention, the fibers are fed into the system in a low density concentration by feeding the fibers with a wide moving belt or other similar conventional feeder that does not excessively break down the chopped fiber strands of the invention.

When the word "about" is used herein it is meant that the amount or condition it modifies can vary some beyond that stated so long as the advantages of the invention are realized. Practically, there is rarely the time or resources available to very precisely determine the limits of all the parameters of one's invention because to do so would require an effort far greater than can be justified at the time the invention is being developed to a commercial reality. The skilled artisan understands this and expects that the disclosed results of the invention might extend, at least somewhat, beyond one or more of the limits disclosed. Later, having the benefit of the inventors' disclosure and understanding the inventive concept and embodiments disclosed including the best mode known to the inventor, the inventor and others can, without inventive effort, explore beyond the limits disclosed to determine if the invention is realized beyond those limits and, when embodiments are found to be without any unexpected characteristics, those embodiments are within the meaning of the term "about" as used herein. It is not difficult for the artisan or others to determine whether such an embodiment is either as expected or, because of either a break in the continuity of results or one or more features that are significantly better than reported by the inventor, is surprising and thus an unobvious teaching leading to a further advance in the art.

The invention is further illustrated with the following examples.

### EXAMPLE 1

A sizing composition according the invention was made by placing 278.8 kg of water into a liquid mixer, then adding the following in the following order and steps:
Add A 1100 silane - 757.3 gms and mix for 5 minutes,
add A 11542 silane - 757.3 gms and mix for an additional 5 minutes,
add GP 2925* polyamide resin film former - 1,325.2 gms,
dissolve Cat-X concentrate (fatty acid tallow amine) 4.18 kg in 4.55 kg of hot water and add to the mixer,
add CL-208** biocide to the mix tank,
check solids content of the mix and add enough water to bring the solids content to
1.25 =/- 0.1 wt. percent, and
check pH of the mix and adjust to 6.0 +/- 1.0 using acetic acid to lower the pH.
   * Available from Georgia Pacific
   * * A Precision Algaecide containing sodium pentachlorophenate.

This sizing was then transported to conventional sizing applicators and applied to the surface of E glass fibers to make chopped strand and direct wound rovings on conventional equipment and using conventional methods, except for the sizing composition. The chopped strands and direct wound rovings were then dried to a moisture content of less than about 2 wt. percent and packaged. These products performed well when dispersed in various polymers, molded and cured to make FRP products.

### EXAMPLE 2

Sized E glass fiber products were made in the same manner as in Example 1 except that the composition of the sizing was modified by removing the GP 2925 film former. The resultant chopped strand and rovings produced better properties in the resultant FRP products.

### EXAMPLE 3

Wet sized chopped strand and direct wound roving products were produced according the procedure of Example 1 above except that the wet sized products were made having a moisture content of 14 +/- 3 wt. percent and packaged wet. These wet sized fiber products can be mixed with hot, thermoplastic polymer(s) (volatilizing the water on the fibers which are vented from the compounding and/or pressing equipment) and molded into FRP products using conventional methods to make FRP products.

### EXAMPLE 4

Wet sized chopped strand and direct wound roving products were produced according the procedure of Example 2 above except that the wet sized products were made having a moisture content of 14 +/- 3 wt. percent and packaged wet. These wet sized fiber products can be mixed with hot, thermoplastic polymer(s) (volatilizing the water on the fibers which are vented from the compounding and/or pressing equipment) and molded into FRP products using conventional methods to make FRP products.

Different embodiments employing the concept and teachings of the invention will be apparent and obvious to those of ordinary skill in this art and these embodiments are likewise intended to be within the scope of the claims. The inventor does not intend to abandon any disclosed inventions that are reasonably disclosed but do not appear to be literally claimed below, but rather intends those embodiments to be included in the broad claims either literally or as equivalents to the embodiments that are literally included.

## Claims

1. A sizing composition comprising 0.2 - 1.2 wt. percent of one or more lubricants, 0.1 -0.4 wt. percent of one or more coupling agents and water, the sizing composition containing no more than 0.40 wt. percent polymer film former.

2. The sizing composition of claim 1 containing no polymer film former.

3. The sizing composition of claim 1 containing no more than 0.35 wt. percent resin polymer film former.

4. The sizing composition of claim 1, 2 or 3 further comprising one or more functional ingredients selected from the group consisting of anti-foaming agents, biocides, fungicides and wetting agents, none of the functional ingredients being a polymer resin film former.

5. Reinforcing strands comprised of a plurality of fibers having on their surfaces an aqueous size comprising 0.2 - 1.2 wt. percent of one or more lubricants, 0.1 - 0.4 wt. percent of one or more coupling agents and water, the sizing composition containing very little to no more than 0.40 wt. percent polymer film former, the amount of chemicals other than water on the reinforcing strands being in the range of about 0.2 wt. percent to about 0.6 wt. percent..

6. The reinforcing strands of claim 5 wherein the fibers comprise glass fibers.

7. The reinforcing strands of claim 6 having no polymer film former on the surfaces of the fibers.

8. The reinforcing strands of claim 6 containing no more than 0.35 wt. percent resin polymer film former on the surfaces of the fibers.

9. The reinforcing strands of claim 5, 6 7 or 8 further comprising one or more functional ingredients selected from the group consisting of anti-foaming agents, biocides, fungicides, surfactants and wetting agents, none of the functional ingredients being a polymer resin film former.

10. The reinforcing strands of claim 5 or 6 wherein the fibers comprise fibers selected from the group consisting of carbon fibers, ceramic fibers and mineral fibers including oxides, carbides, nitrides and borides of silica, aluminum, zircon, magnesium and zirconium.

11. A method of making composite pellets and/or loafs of molding compounds for molding into fiber reinforced products comprising
a) feeding sized fiber strands, in the form of roving or chopped strands, into an apparatus for blending dispersing, breaking in the case of roving, the fiber strands comprising a plurality of fibers having on their surfaces an aqueous size comprising 0.2 - 1.2 wt. percent of one or more lubricants, 0.1 - 0.4 wt. percent of one or more coupling agents and water, the sizing composition containing no more than 0.40 wt. percent polymer film former, and the amount of chemicals other than water on the reinforcing strands being in the range of about 0.2 wt. percent to about 0.6 wt. percent,
b) kneeding the sized fiber strands, and sized fibers of the sized fiber strands into one or more polymers to form a plastic fiber reinforced polymer mixture, and
c) extruding the mixture to form pellets or loafs of fiber reinforced plastic molding compound.

12. Molding compounds comprising pellets and shapes comprising one or more polymers or polymer precursors and fibers having an aqueous size thereon, the aqueous size compositioni comprising 0.2 - 1.2 wt. percent of one or more lubricants, 0.1 - 0.4 wt. percent of one or more coupling agents and water, the sizing composition containing no more than 0.40 wt. percent polymer film former.

13. The molding compounds of claim 12 wherein the sizing composition contains no more than trace amounts of a resin polymer film former.

14. The molding compounds of claim 12 or 13 wherein the fibers are selected from a group consisting of glass fibers, carbon fibers, ceramic fibers and mineral fibers including oxides, carbides, nitrides and borides of silica, aluminum, zircon, magnesium and zirconium.

15. A method of molding fiber reinforced products comprising;
a) forming a molding compound in the form of pellets or other plastic shapes into the desired shape under pressure, the molding compound comprising one or more polymers or polymer precursors and fibers having an aqueous size thereon, the aqueous size comprising 0.2 - 1.2 wt. percent of one or more lubricants, 0.1 - 0.4 wt. percent of one or more coupling agents and water, the sizing composition containing no more than 0.40 wt. percent polymer film former, and
b) curing or cross-linking and/or cooling the polymer(s) in the formed shape to produce the fiber reinforced products
